# EUROPEAN PATENT SPECIFICATION

(11) **EP 2 228 570 B1**
(45) Date of publication and mention of the grant of the patent: **14.09.2011**
(21) Application number: 08856660.9
(22) Date of filing: 21.11.2008
(51) Int. Cl.: F16H 63/32

(54) **SHIFT FORK**
SCHALTGABEL
FOURCHETTE DE BOÎTE DE VITESSES

(30) Priority: 05.12.2007 JP 2007314872
(43) Date of publication of application: 15.09.2010
(73) Proprietor: Toyota Jidosha Kabushiki Kaisha, Toyota-shi, Aichi 471-8571 (JP)
(72) Inventor: NARITA, Ryuji, Toyota-shi Aichi 471-8571 (JP)
(74) Representative: Albutt, Anthony John
(86) International application number: PCT/JP2008/003435
(87) International publication number: WO 2009/072248

(56) References cited:
- EP-A1- 0 112 546
- EP-A2- 0 924 449
- JP-A- 7 133 865
- JP-A- 2001 248 729
- JP-T- 4 506 106
- JP-U- 58 113 126

## Description

The present invention relates to a shift fork, and more particularly to a shift fork to be engaged with a sleeve for changing the driving force transmission paths in a driving force transmitting apparatus and to be operated in the axial direction of the sleeve.

### BACKGROUND OF THE INVENTION

In general, there are many kinds of driving force transmitting apparatuses such as transmissions used for vehicles, and each driving force transmitting apparatus comprises a sleeve internally toothed and movable to change the driving force transmission paths in the driving force transmitting apparatus between parallel shaft type transmission gears. The sleeve is adapted to be operated so as to be axially moved by a shift fork engaged with the sleeve.

As one of the conventional shift forks of this kind, there is known a shift fork comprising a pair of engagement arm portions and a plurality of pairs of slidable contacting members each having an abrasion resistance, each pair of slidable contacting members being securely attached to each of the engagement arm portions so as to be brought into slidable contact with the wall portions of an annular outer peripheral groove formed on the outer peripheral portion of the sleeve. The shift fork is constructed to have a plurality of fitting members formed on each of the slidable contacting members of a plate shape, the fitting members being interference-fitted with the engagement arm portion to enable the pair of slidable contacting members to be integrally attached to the engagement arm portion (see for example Patent Document 1, on which the preamble of claim 1 is based).

Another known shift fork comprises a pair of engagement arm portions having their respective curved slidable contacting faces facing to a sleeve in such a manner that each of the engagement arm portions has a pressing point for axially pressing the sleeve, which is an ideal pressing point on the plane including the central axis of the sleeve (see for example Patent Document 2).

The other known shift fork comprises a plurality of pairs of plate-like slidable contacting members each having a back face and a plurality of projections projecting from the back face, and a pair of engagement arm portions each formed with through bores allowing the projections to be received therein, the forward ends of the respective projections of the pair of slidable contacting members being integrally connected with each other by an ultrasonic welding (see for example Patent Document 3).
Patent Document 1: JP 2001-248729 A
Patent Document 2: JP H11-173415 A
Patent Document 3: JP H07-133865 A

### PROBLEMS TO BE SOLVED

The conventional shift forks thus disclosed, however, encounter the following problems in the case that the shift fork cannot have any portion thick in the operational direction because of the reduction in weight and size of the driving force transmitting apparatus, or in the case that the shift fork and the slidable contacting members are made to be low in rigidity to make smooth the operational feeling of a manual transmission.

The shift fork having a low rigidity is largely deflected during the operation thereof so that the contacting point between each slidable contacting member and the sleeve is deviated in position toward the base end portion of the shift fork, thereby easily causing the backlashing to be occurred at the portion to fix the slidable contacting member to the engagement arm portion and close to the base end portion of the shift fork. In the event of the backlashing thus occurred, there is a possibility that the slidable contacting member is unevenly worn, and the sleeve and the slidable contacting member are burned and adhered to each other. Moreover, the slidable contacting member is possibly damaged and deformed when the shift fork and the slidable contacting member are subjected to extremely large pressing force with the gear slipping noise and the like.

In the case that a strip member like the slidable contacting member is secured to the engagement arm portion by a plurality of fitted portions, it is generally intended that one certain fitted portion is adapted to serve as a positioning basis among the fitted portions, while the residual fitted portions are each adapted to have a loose fitting. However, the sleeve is generally in mesh with a rotation transmitting element arranged on the input side, so that the slidable contacting member attached to the engagement arm portion of the shift fork for operating the sleeve receives a friction force to resist the movement of the sleeve in the tangential direction thereof at the one side end portion of the slidable contacting member in the rotational direction opposite to the rotational direction of the sleeve, and receives a friction force to trail the sleeve in the tangential direction thereof at the other side end portion of the slidable contacting member in the opposite rotational direction. Therefore, it is likely to be preferable that the fitted portion at the one side end portion of the slidable contacting member among the fitted portions, each thereof being constituted by the engagement arm portion and the projection serving as a fixing member for fixing the slidable contacting member to the engagement arm portion of the shift fork, has a tough fitting, the one side end portion of the slidable contacting member being easily unstable in its posture, while the fitted portion at the other side end portion of the slidable contacting member among the fitted portions has a fitting looser than the tough fitting above described at the one side end portion of the slidable contacting member, the other side end portion of the slidable contacting member being easily stable in its posture with the sleeve being trailed. However, when the shift fork having a low rigidity is intended to be used, the deviation of the input point of the pressing force or the above-described contacting point toward the base end portion of the shift fork and the deflection of the shift fork have an effect on the reduction in the backup area to support the back side of the slidable contacting member. The extent of this effect tends to become larger than the effect on the postures of the respective end portions of the slidable contacting member given by the pressing force applied by the slide operation of the shift fork. As a result, in the case that the shift fork is made to be low in rigidity and a resin material is used for the slidable contacting member, even if the fitted portion at the one side end portion of the slidable contacting member is adapted to be a zero clearance fitting, and the fitted portion at the other side end portion of the slidable contacting member is adapted to be a clearance fitting, the backlashing is easily be occured at the portion of the slidable contacting member close to the base end portion of the shift fork.

The present invention has been made to solve the foregoing problems encountered by the conventional shift fork. It is, therefore, an object of the present invention to provide a shift fork in which the slidable contacting members can be restrained from backlashing, thereby preventing the slidable contacting members and the sleeve from being burned and adhered to each other or preventing the slidable contacting members from being damaged even though the shift fork is made to be low in rigidity.

### DISCLOSURE OF INVENTION

The above object can be achieved by means of :
(1) A shift fork, comprising: a plurality of slidable contacting members each held in slidable contact with an annular operation portion provided on the outer peripheral portion of a sleeve axially movable in a driving force transmitting apparatus to change a driving force transmission path therein; and a fork member having a pair of engagement arm portions each held in engagement with the sleeve through each of the slidable contacting members and a base end portion operated to move in the axial direction of the sleeve, wherein each of the slidable contacting members has a plate portion one side surface thereof being in opposing relationship with the annular operation portion in the axial direction of the sleeve, and a plurality of projections each retained by the engagement arm portion of the fork member to project from the other side surface of the plate portion, the projections being spaced with each other in the circumferential direction of the sleeve; the engagement arm portion of the fork member has one side retaining hole portion retaining one side projection close to the base end portion of the fork member among the projections, and the other side retaining hole portion retaining the other side projection remote from the base end portion of the fork member among the projections; and the fitted portion constituted by the one side projection and the one side retaining hole portion forms a positioning portion having tougher fitting than the fitted portion constituted by the other side projection and the other side retaining hole portion.

Accordingly, the fitted portion of the one side projection and the one side retaining hole portion close to the base end portion of the fork member forms a positioning portion having tougher fitting than the fitted portion of the other side projection and the other side retaining hole portion remote from the base end portion of the fork member. Therefore, the one end portion of each slidable contacting member can reliably be restrained from backlashing, thereby preventing each slidable contacting member and the sleeve from being burned and adhered to each other or preventing the slidable contacting members from being damaged, even though the fork member is made to be low in rigidity, thereby resulting in a large deflection of the fork member so that the pressing force to each slidable contacting member applied by the operation of the fork member is deviated in position toward one end portion of each slidable contacting member close to the base end portion of the fork member.

Further advantages can be achieved by the following preferred embodiments.
(2) A shift fork according to above aspect (1), wherein the dimension of fitting clearance between the one side projection and the one side retaining hole portion and the dimension of fitting clearance between the other side projection and the other side retaining hole portion are set in such a manner that the fitting clearance between the one side projection and the one side retaining hole portion is smaller than the fitting clearance between the other side projection and the other side retaining hole portion.

In accordance with this aspect, even if the dimensions of the respective spaced intervals between the projections of each slidable contacting member are easily be varied, or each slidable contacting member is made to be low in regidity (each slidable contacting member is made of a resin, for example), the fitted portion of the one side projection of the slidable contacting member and the one side retaining hole portion close to the base end portion of the fork member can form a positioning portion, so that one side portion of each slidable contacting member can reliably be restrained from backlashing, thereby preventing each slidable contacting member and the sleeve from being burned and adhered to each other or preventing each slidable contacting member from being damaged, even though the fork member is made to be low in rigidity, thereby resulting in a large deflection of the fork member during operation thereof.

(3) A shift fork according to above aspect (1) or (2), wherein the projections of the slidable contacting members have the same diameter, and the one side retaining hole portion is smaller in inner diameter than the other side retaining hole portion.

In accordance with this aspect, the backing to each slidable contacting member can reliably realized by ensuring the required backup area to support each slidable contacting member by the engagement arm portion while ensuring the connection strength of the projections with the engagement arm portion at the one side of each slidable contacting member close to the base end portion of the fork member. As a result, it is made possible to reliably prevent each slidable contacting member and the sleeve from being burned and adhered to each other or preventing each slidable contacting member from being damaged.

(4) A shift fork according to any one of above aspects (1) to (3), wherein the annular operation portion is constituted by both wall portions positioned on the both sides of an annular outer peripheral groove formed on the outer peripheral portion of the sleeve, the slidable contacting members being respectively attached to the both side surfaces of the engagement arm portion in the axial direction of the sleeve so as to be respectively held in opposing relationship with the both wall portions on the both sides of the annular outer peripheral groove.

In accordance with this aspect, each slidable contacting member can be prevented from backlashing during the operation of the shift fork in either axial direction, and it is not required to distinguish two sides of the shift fork in an assembling process because the mounting direction of the shift fork to the fork shaft in an axial direction is not relevant to the rotational direction of the sleeve.

(5) A shift fork according to above aspect (4), wherein the one side retaining hole portion and the other side retaining hole portion are constituted by parallel through bores formed to pass through the engagement arm portion of the fork member in the axial direction of the sleeve, and the projections of the slidable contacting member attached to one side of the engagement arm portion and the projections of the slidable contacting member attached to the other side of the engagement arm portion are held in integral connection with each other in the through bores.

In accordance with this aspect, the slidable contacting members can be further strongly connected to the shift fork, thereby reliably preventing each of the slidable contacting members from backlashing as well as increasing the connection strength of each of the slidable contacting members with the engagement arm portion.

(6) A shift fork according to any one of above aspects (1) to (5), wherein each of the slidable contacting members is made of a resin.

In accordance with this aspect, the operational feeling of a manual transmission, for example, can be extremely smooth because of the lowering in rigidity of not only the shift fork but also each of the slidable contacting members.

(7) A manual transmission comprising the shift fork as defined in any one of above aspects (1) to (6).

In accordance with this aspect, the manual transmission can be realized to have a smooth operational feeling because of the lowering in rigidity of the shift fork.

### ADVANTAGEOUS EFFECTS OF INVENTION

According to the present invention, there is provided the shift fork which can restrain the one end portion of each slidable contacting member close to the base end portion of the fork member from backlashing, thereby preventing each of the slidable contacting members and the sleeve from being burned and adhered to each other or preventing each of the slidable contacting members from being damaged, even though the fork member is made to be low in rigidity, thereby resulting in a large deflection of the fork member so that the pressing force to each of the slidable contacting members applied by the operation of the fork member is deviated in position toward one end portion of each of the slidable contacting members close to the base end portion of the fork member.

### BRIEF DESCRIPTION OF DRAWINGS

The features and advantageous effects of the present invention will be described hereinafter with reference to the accompanying drawings.
FIG. 1 is a fragmentary side view, partly cross-sectioned of part of a transmission having a shift fork according to one embodiment of the present invention.
FIG. 2 is a cross-sectional view of an essential part of the transmission in the embodiment of the present invention.
FIG. 3 is a front view of the shift fork seen from the axial direction of a sleeve forming part of the transmission in the embodiment of the present invention.
FIG. 4 is an enlarged view of an engagement arm portion forming part of the shift fork of the transmission in the embodiment of the present invention, FIG. 4(a) being a fragmentary front view partly enlarged from FIG. 3, and FIG. 4(b) being a cross-sectional view taken along the line B-B of FIG. 3.

### REFERENCE SIGNS LIST

10: shift fork
11, 12: slidable contacting member
11a, 12a: plate portion
11b, 12b: one side projection
11c, 12c: the other side projection
13b, 13d: one side retaining hole portion
13c, 13e: the other side retaining hole portion
13L, 13R: engagement arm portion
14: base end portion
15: fork shaft
16: fork member
20: sleeve
20e: annular outer peripheral groove
21, 22: annular operation portion (both wall portions)
31, 32: gear (toothed rotation transmission element)

### MOST PREFERABLE EMBODIMENT OF INVENTION

The preferable embodiments of the present invention will be described hereinafter with reference to the accompanying drawings.

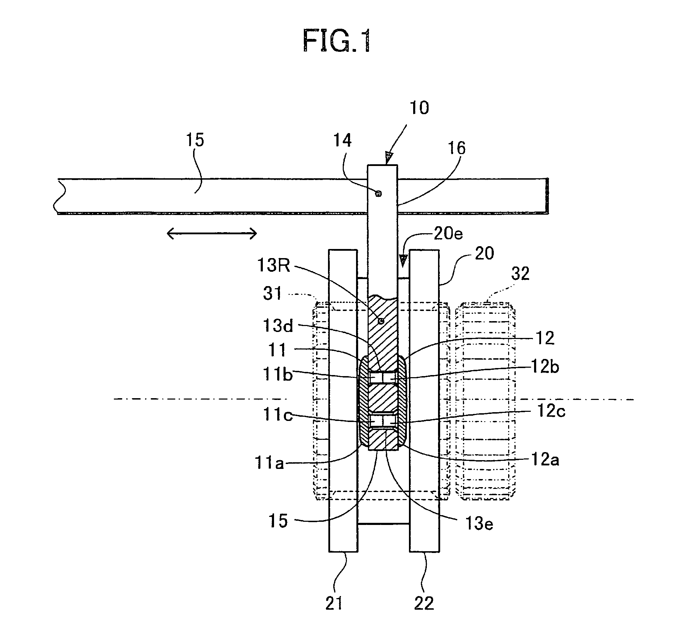

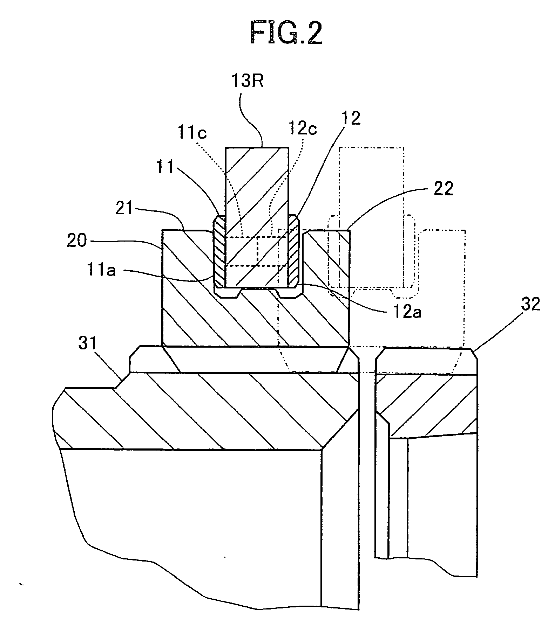

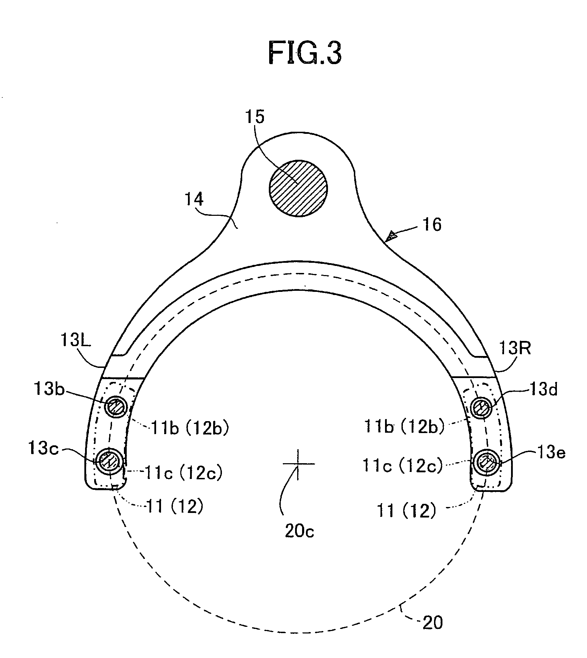

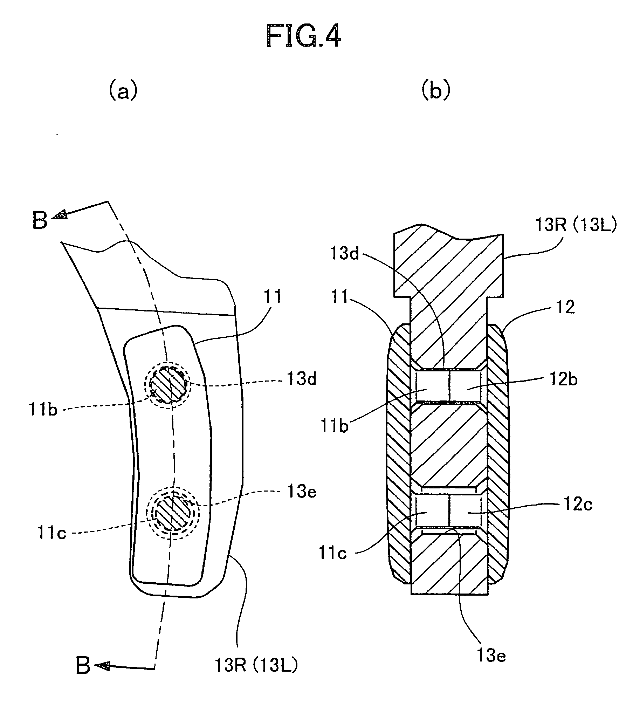

FIG. 1 is a fragmentary side view, partly cross-sectioned of part of a transmission having a shift fork according to one embodiment of the present invention, FIG. 2 is a cross-sectional view of an essential part of the transmission, FIG. 3 is a front view of the shift fork seen from the axial direction of a sleeve forming part of the transmission, and FIG. 4 is an enlarged view of an engagement arm portion forming part of the shift fork, FIG. 4(a) being a fragmentary front view partly enlarged from FIG. 3, and FIG. 4(b) being a cross-sectional view taken along the line B-B of FIG. 3.

The construction of the shift fork will firstly be explained hereinafter.

As shown in FIGS. 1 to 3, the shift fork 10 according to one embodiment of the present invention is provided in a shift transmission mechanism constituting part of, for example, a manually operated transmission of a vehicle. The shift fork 10 is supported on a fork shaft 15 and axially movable in response to the axial movement of the fork shaft 15 by means of an operation means not shown in the drawings. The shift fork 10 comprises a pair of slidable contacting members 11, 12 respectively held in slidable contact with a pair of annular operation portions 21, 22, provided on the outer peripheral portion of a sleeve 20, and a fork member 16 having a pair of engagement arm portions 13L, 13R each held in engagement with the sleeve 20 through either one of the slidable contacting members 11, 12, and a base end portion 14 operated by the fork shaft 15 to move in the axial direction of the sleeve 20.

The sleeve 20 has an inner peripheral portion formed with splined teeth (not shown in detail) which are generally in mesh with one of gears 31, 32 (toothed rotation transmitting elements) coaxially arranged with the sleeve 20, for example in mesh with the gear 31 as shown in FIGS. 1 and 2. The sleeve 20 is axially moved to be selectively in mesh with the other of the gears 31, 32 to couple between the gears 31 and 32, thereby establishing a driving force transmission path therebetween. When the gears 31, 32 are decoupled, the driving force transmission path is severed. In this manner, the driving force transmission path can be changed between a plurality of parallel shaft type transmission gears including the gears 31, 32. The sleeve 20 is formed with an annular outer peripheral groove 20e, both wall portions thereof constituting annular operation portions 21, 22 for axially moving the sleeve 20.

The slidable contacting members 11, 12 of the shift fork 10 are shown in FIG. 4 to have the same shape and respective longitudinal end portions thereof are in symmetrical relationship with each other. The slidable contacting members 11, 12 have their respective plate portions 11a, 12a, one side surfaces of the plate portions 11a, 12a being in opposing relationship with the annular operation portions 21, 22, respectively, in the axial direction of the sleeve 20. The slidable contacting members 11, 12 further have a plurality of roughly cylindrical projections 11b, 11c, 12b, 12c projecting from the other side surfaces of the plate portions 11a, 12a, which are retained by a pair of engagement arm portions 13L, 13R of the fork member 16 to be spaced with each other in the circumferential direction of the sleeve 20.

As shown in FIG. 3, the engagement arm portions 13L, 13R of the fork member 16 are in the form of arcuate shapes and partly received in the annular outer peripheral groove 20e of the sleeve 20 so as to extend in the opposite circumferential directions respectively to go substantially half around the sleeve 20. The engagement arm portions 13L, 13R respectively have one side retaining hole portions 13b, 13d in the form of circular cross-sections and each retaining the one side projections 11b, 12b close to the base end portion 14 of the fork member 16 among the projections 11b, 11c, 12b, 12c, and respectively have the other side retaining hole portions 13c, 13e in the form of circular cross-sections and each retaining the other side projections 11c, 12c remote from the base end portion 14 of the fork member 16 among the projections 11b, 11c, 12b, 12c.

The other side projections 11c, 12c and the other side retaining hole portions 13c, 13e remote from the base end portion 14 of the fork member 16 are positioned in the vicinity of the height of the center of the sleeve 20 (the height of the center 20c in FIG. 3, hereinafter simply referred to as "center height"), while the one side projections 11b, 12b and the one side retaining hole portions 13b, 13d close to the base end portion 14 of the fork member 16 are positioned at the location offset from the center height of the sleeve 20 toward the base end portion 14.

The dimension of the fitting clearance between the one side projections 11b, 12b and each of the one side retaining hole portions 13b, 13d, and the dimension of the fitting clearance between the other side projections 11c, 12c and each of the other side retaining hole portions 13c, 13e are set in such a manner that the fitted portion constituted by the one side projections 11b, 12b and each of the one side retaining hole portions 13b, 13d close to the base end portion 14 of the fork member 16 form a positioning portion having tougher fitting than the fitted portion constituted by the other side projections 11c, 12c and each of the other side retaining hole portions 13c, 13e remote from the base end portion 14 of the fork member 16.

More specifically, according to the embodiment of the present invention, the plurality of the projections 11b, 11c, 12b, 12c are identical in diameter, and each of the one side retaining hole portions 13b, 13d has a diameter smaller than that of the other side retaining hole portions 13c, 13e. As a result, the dimensions of the fitting clearances are set in such a manner that the fitting clearance between the one side projections 11b, 12b and each of the one side retaining hole portions 13b, 13d close to the base end portion 14 of the fork member 16 is not more than zero clearance, smaller than the fitting clearance between each of the other side projections 11c, 12c and each of the other side retaining hole portions 13c, 13e remote from the base end portion 14 of the fork member 16.

On the other hand, the slidable contacting members 11, 12 are shown in FIGS. 2 and 4 to be attached to the both sides of each of the pair of engagement arm portions 13L, 13R of the fork member 16 in such a manner that the slidable contacting members 11, 12 are respectively in opposing relationship with the both side wall portions 21, 22 of the annular outer peripheral groove 20e of the sleeve 20 in the axial direction of the sleeve 20.

Further, the one side retaining hole portions 13b, 13d and the other side retaining hole portions 13c, 13e are constituted by parallel through bores formed to extend in the axial direction of the sleeve 20 within the pair of engagement arm portions 13L, 13R of the fork member 16. The projections 11b, 11c, 12b, 12c of each pair of the slidable contacting members 11, 12 attached to both sides of each of the engagement arm portions 13L. 13R of the fork member 16 are received in the through bores, and integrally connected to each other in the through bores by, for example, an ultrasonic welding.

The sleeve 20 is made of a steel material having a free-machining property and a predetermined mechanical strength, and is subjected to a known surface treatment for hardening the surface of the steel material. The fork member 16 is made of, for example, an aluminum alloy or a steel material. The slidable contacting members 11, 12 are made of, for example, mainly a resin and may be made of a material having an enhanced strength with a reinforced fiber.

The operation of the shift fork will then be described hereinafter.

In the embodiment of the present invention thus constructed, the fork shaft 15 is operated by an operating means not shown in the drawings to have the shift fork 10 move in the axial direction of the sleeve 20. At this time, the sleeve 20 is axially pressed and moved toward either one of the both wall portions 21, 22 of the sleeve 20 to form a driving force transmission path between the gears 31, 32 coaxially arranged with the sleeve 20 or sever the driving force transmission path thus formed through the sleeve 20.

During the operation of the sleeve 20 by the shift fork 10, the engagement arm portions 13L, 13R of the shift fork 10 are subjected to an operational reaction force from the sleeve 20, thereby deflecting the shift fork 10.

Under these conditions, the fitted portion of the one side projections 11b, 12b and each of the one side retaining hole portions 13b, 13d close to the base end portion 14 of the fork member 16 forms a positioning portion having tougher fitting than the fitted portion of the other side projections 11c, 12c and each of the other side retaining hole portions 13c, 13e remote from the base end portion 14 of the fork member 16. Therefore, the respective one end portions of the slidable contacting member 11, 12 close to the base end portion 14 can reliably be restrained from backlashing, thereby preventing the slidable contacting members and the sleeve from being burned and adhered to each other or preventing the slidable contacting members from being damaged, even though the fork member 16 is made to be low in rigidity, thereby resulting in a large deflection of the fork member 16 so that the pressing force to either one of the slidable contacting members 11, 12 applied by the operation of the fork member 16 is deviated in position toward one end portion of each slidable contacting member close to the base end portion 14 of the fork member 16.

As described above, the dimensions of respective fitting clearances between the plurality of projections 11b, 11c, 12b, 12c and the one side retaining hole portions 13b, 13d as well as the other side retaining hole portions 13c, 13e are set in such a manner that the respective fitting clearances between the one side projections 11b, 12b and each of the one side retaining hole portions 13b, 13d are smaller than the respective fitting clearances between the other side projections 11c, 12c and each of the other side retaining hole portions 13c, 13e. Therefore, even if the dimensions of the respective spaced intervals between the projections 11b, 11c of the slidable contacting member 11 and between the projections 12b, 12c of the slidable contacting members 12 are easily be varied, or the slidable contacting members 11, 12 are each made of a resin (has a lower rigidity than metal), the fitted portion of the one side projections 11b, 12b of each of the slidable contacting members 11, 12 and each of the one side retaining hole portions 13b, 13d close to the base end portion 14 of the fork member 16 can form a positioning portion, so that the one side portions of the slidable contacting members 11, 12 can reliably be restrained from backlashing, thereby preventing the slidable contacting members and the sleeve from being burned and adhered to each other or preventing the slidable contacting members from being damaged, even though the fork member 16 is made to be low in rigidity, thereby resulting in a large deflection of the fork member 16 during operation thereof.

As described above, the projections 11b, 11c, 12b, 12c are identical in cross-section area and diameter, and the one side retaining hole portions 13b, 13d are smaller in inner diameter than the other side retaining hole portions 13c, 13e, respectively. Therefore, the backing to each of the slidable contacting members 11, 12 can reliably realized by ensuring the required backup area to support each of the slidable contacting members by each of the engagement arm portions 13L, 13R while ensuring the connection strength of the projections 11b, 12b with each of the engagement arm portions 13L, 13R at the one sides of the slidable contacting members close to the base end portion 14 of the fork member 16.

As described above, the slidable contacting members 11, 12 are constructed to be attached to each of the engagement arm portions 13L, 13R of the fork member 16 in such a manner that the slidable contacting members 11, 12 are in opposing relationship with the both side wall portions 21, 22, respectively, of the annular outer peripheral groove 20e of the sleeve 20 in the axial direction of the sleeve 20. Therefore, the slidable contacting members 11, 12 can be prevented from backlashing during the operation of the shift fork 10 in either axial direction. In addition, the shift fork 10 can be assembled in a preferable workability without distinguishing two sides thereof, because the mounting direction of the shift fork 10 to the fork shaft 15 in an axial direction is not relevant to the rotational direction of the sleeve 20.

As described above, the one side retaining hole portions 13b, 13d and the other side retaining hole portions 13c, 13e are constituted by parallel through bores formed to extend in the axial direction of the sleeve 20 within the pair of engagement arm portions 13L, 13R of the fork member 16, and the projections 11b, 11c of the slidable contacting member 11 and the projections 12b, 12c of the slidable contacting member 12 respectively attached to both sides of each of the engagement arm portions 13L, 13R of the fork member 16 are received in the through bores, and integrally connected to each other in the through bores. Therefore, the slidable contacting members 11, 12 can be further strongly connected to the shift fork 10, thereby reliably resrtaining the slidable contacting members 11, 12 from backlashing as well as increasing the connection strength of the pair of the slidable contacting members 11, 12 with the engagement arm portions 13L, 13R.

In addition, the operational feeling of the manual transmission can be extremely smooth because of the lowering in rigidity of not only the shift fork 10 but also the slidable contacting members 11, 12.

In the manual transmission equipped with the shift fork according to the present embodiment thus constructed, the respective one end portions of the slidable contacting members 11, 12 close to the base end portion 14 can reliably be restrained from backlashing, thereby preventing the slidable contacting members 11, 12 and the sleeve 20 from being burned and adhered to each other or preventing the slidable contacting members 11, 12from being damaged, even though the fork member 16 is made to be low in rigidity, thereby resulting in a large deflection of the fork member 16 so that the pressing force to either one of the slidable contacting member 11, 12 applied by the operation of the fork member 16 is deviated in position toward one end portion of each slidable contacting member 11, 12 close to the base end portion 14 of the fork member 16.

While the above embodiment has been described with reference to the manual transmission exemplified as one of the driving force transmitting apparatuses using the shift fork, the shift fork according to the present invention is not limited to the above manual transmission but may be used for an auxiliary transmission coupled with a transfer apparatus and having such a sleeve, or otherwise an automatic transmission. Further, the shift fork according to the present invention may be used for an automatic transmission capable of manually changing speeds in a pseudo manner.

The materials of the slidable contacting members and the fork member are not limited to a specific material. The slidable contacting members may be made of for example a metal softer than that of the sleeve. The projections of the slidable contacting members have been explained in the foregoing description to be integrally connected to each other in the through bores by an ultrasonic welding, however, connecting methods other than the ultrasonic welding may be utilized. The fitted portion forming a positioning portion has been adapted to be a zero clearance fitting, but it may be adapted to be an interference fitting.

### INDUSTRIAL APPLICABILITY

From the foregoing description, it will be understood that the present invention can provide the shift fork which can restrain the one end portion of the slidable contacting members close to the base end portion of the fork member from backlashing, thereby preventing the slidable contacting members and the sleeve from being burned and adhered to each other or preventing the slidable contacting members from being damaged, even though the fork member is made to be low in rigidity, thereby resulting in a large deflection of the fork member so that the pressing force to the slidable contacting member applied by the operation of the fork member is deviated in position toward one end portion of the slidable contacting member close to the base end portion of the fork member. The present invention is therefore useful for a shift fork to be engaged with a sleeve for changing the driving force transmission paths in a driving force transmitting apparatus and to be operated in the axial direction of the sleeve.

## Claims

1. A shift fork comprising a plurality of slidable contacting members (11,12) each held in slidable contact with an annular operation portion (21,22) provided on the outer peripheral portion of a sleeve (20) axially movable in a driving force transmitting apparatus to change a driving force transmission path therein, and a fork member (16) having a pair of engagement arm portions (13L,13R) each held in engagement with the sleeve through each of the slidable contacting members and a base end portion (14) operated to move in the axial direction of the sleeve, whereby
each of the slidable contacting members (11,12) has a plate portion (11a,12a) one side surface thereof being in opposing relationship with the annular operation portion (21,22) in the axial direction of the sleeve and a plurality of projections (11b,12b;11c,12c) each retained by the engagement arm portion (13L,13R) of the fork member to project from the other side surface of the plate portion (11a,12a), the projections being spaced with each other in the circumferential direction of the sleeve,
each of the engagement arm portions of the fork member has one side retaining hole portion (13b,13d) retaining one side projection close to the base end portion of the fork member among the projections, and the other side retaining hole portion (13c,13e) retaining the other side projection remote from the base end portion of the fork member among the projections, and **characterized in that**
the fitted portion constituted by the one side projection (11b,12d) and the one side retaining hole portion (13d) forms a positioning portion having tougher fitting than the fitted portion constituted by the other side projection (11c,12c) and the other side retaining hole portion (13e)

2. A shift fork according to claim 1, wherein the dimension of fitting clearance between the one side projection (11b,12b) and the one side retaining hole portion (13d) and the dimension of fitting clearance between the other side projection (11c,12c) and the other side retaining hole portion (13e) are set in such a manner that the fitting clearance between the one side projection and the one side retaining hole portion is smaller than the fitting clearance between the other side projection and the other side retaining hole portion.

3. A shift fork according to claim 1, wherein the projections (11b,12b;11c,12c) of the slidable contacting members have the same diameter, and the one side retaining hole portion (13b,13d) is smaller in inner diameter than the other side retaining hole portion (13c,13e).

4. A shift fork according to any one of claims 1 to 3, wherein
the annular operation portion (21,22) is constituted by both wall portions positioned on the both sides of an annular outer peripheral groove formed on the outer peripheral portion of the sleeve, and
the slidable contacting members (11,12) are respectively attached to the both sides of the engagement arm portion (13L,13R) in the axial direction of the sleeve so as to be respectively held in opposing relationship with the both wall portions on the both sides of the annular outer peripheral groove.

5. A shift fork according to claim 4, wherein the one side retaining hole portion (13b,13d) and the other side retaining hole portion (13c,13e) are constituted by parallel through bores formed to pass through the engagement arm portion of the fork member in the axial direction of the sleeve, and the projections of the slidable contacting member attached to one side of the engagement arm portion and the projections of the slidable contacting member attached to the other side of the engagement arm portion are held in integral connection with each other in the through bores.

6. A shift fork according to claim 5, wherein each of the slidable contacting members (11,12) is made of a resin.

7. A manual transmission comprising the shift fork as defined in claim 1.

## Patentansprüche

1. Schaltgabel mit einer Mehrzahl von Gleitkontaktelementen (11, 12), die jeweils mit einem ringförmigen Betätigungsabschnitt (21, 22) in Gleitkontakt stehen, der am Außenrandabschnitt einer Muffe (20) vorgesehenen ist, die in einem Antriebskraft-Übertragungsmechanismus verschiebbar angeordnet ist, um einen darin befindlichen Antriebskraft-Übertragungsweg zu ändern, und mit einem Gabelelement (16), das zwei Kupplungsarmabschnitte (13L, 13R), die jeweils über die Gleitkontaktelemente mit der Muffe verkuppelt sind, und einen Basisendabschnitt (14) aufweist, der betätigt wird, um ihn in Richtung der Muffenachse zu bewegen, wobei jedes der Gleitkontaktelemente (11, 12) einen Tellerabschnitt (11a, 12a), von dem eine Seitenfläche dem ringförmigen Betätigungsabschnitt (21, 22) in Richtung der Muffenachse gegenüber angeordnet ist, und eine Mehrzahl von Vorsprüngen (11b, 12b; 11c, 12c) aufweist, die jeweils vom Kupplungsarmabschnitt (13L, 13R) des Gabelelements so gehalten werden, dass sie von der anderen Seitenfläche des Tellerabschnitts (11a, 12a) vorstehen, wobei die Vorsprünge in Umfangsrichtung der Muffe voneinander beabstandet sind,
wobei jeder der Kupplungsarmabschnitte des Gabelelements einen Halteöffnungsabschnitt (13b, 13d) auf einer Seite, der von den Vorsprüngen einen Vorsprung, der sich auf einer Seite nahe am Basisendabschnitt des Gabelelements befindet, hält, und einen Halteöffnungsabschnitt (13c, 14e) auf einer anderen Seite aufweist,
der von den Vorsprüngen einen Vorsprung, der sich auf einer Seite fern vom Basisendabschnitt des Gabelelements befindet, hält,
und **dadurch gekennzeichnet, dass**
der zusammengesteckte Abschnitt, der von dem Vorsprung (11b, 12b) auf der einen Seite und dem Halteöffnungsabschnitt (13d) auf der einen Seite gebildet wird,
einen Positionierungsabschnitt bildet, der einen festeren Sitz hat als der zusammengesteckte Abschnitt, der von dem Vorsprung (11c, 12c) auf der anderen Seite und dem Halteöffnungsabschnitt (13e) auf der anderen Seite gebildet wird.

2. Schaltgabel nach Anspruch 1, wobei die Abmessung des Spiels zwischen dem Vorsprung (11b, 12b) auf der einen Seite und dem Halteöffnungsabschnitt (13d) auf der einen Seite und Abmessung des Spiels zwischen dem Vorsprung (11c, 12c) auf der anderen Seite und dem Haltöffnungsabschnitt (13e) auf der anderen Seite so eingestellt sind, dass das Spiel zwischen dem Vorsprung auf der einen Seite und dem Halteöffnungsabschnitt auf der einen Seite kleiner ist als das Spiel zwischen dem Vorsprung auf der anderen Seite und dem Halteöffnungsabschnitt auf der andere Seite.

3. Schaltgabel nach Anspruch 1, wobei die Vorsprünge (11b, 23b; 12c, 12c) der Gleitkontaktelemente jeweils den gleichen Durchmesser aufweisen, und der Halteöffnungsabschnitt (13b, 13d) auf der einen Seite einen kleineren Durchmesser aufweist als der Halteöffnungsabschnitt (13c, 13e) auf der anderen Seite.

4. Schaltgabel nach einem der Ansprüche 1 bis 3, wobei
der ringförmige Betätigungsabschnitt (21, 22) von beiden Wandabschnitten gebildet wird, die sich zu beiden Seiten einer ringförmigen Außenumfangsnut befinden, die im Außenumfangsabschnitt der Muffe ausgebildet ist, und
die Gleitkontaktelemente (11, 12) in Richtung der Muffenachse jeweils an den beiden Seiten des Kupplungsarmabschnitts (13L, 13R) befestigt sind, so dass sie jeweils den beiden Wandabschnitten zu beiden Seiten der ringförmigen Außenumfangsnut gegenüber angeordnet sind.

5. Schaltgabel nach Anspruch 4, wobei der Halteöffnungsabschnitt (13b, 13d) auf der einen Seite und der Halteöffnungsabschnitt (13c, 13e) auf der anderen Seit von parallelen Durchgangsbohrungen gebildet werden, die in Richtung der Muffenachse durch den Kupplungsarmabschnitt des Gabelelements hindurch ausgebildet sind, und die Vorsprünge des Gleitkontaktelements, das an der einen Seite des Kupplungsarmabschnitts befestigt ist, und die Vorsprünge des Gleitkontaktelements, das an der andere Seite des Kupplungsarmabschnitts befestigt ist, in den Durchgangsbohrungen in integraler Verbindung miteinander gehalten werden.

6. Schaltgabel nach Anspruch 5, wobei jedes der Gleitkontaktelemente (11, 12) aus einem Harz besteht.

7. Manuelles Getriebe, das die Schaltgabel nach Anspruch 1 aufweist.

## Revendications

1. Fourchette de boîte de vitesses comprenant une pluralité d'éléments de contact coulissant (11, 12), chacun maintenu en contact coulissant avec une partie de commande annulaire (21, 22) prévue sur la partie périphérique externe d'un manchon (20) axialement mobile dans un appareil de transmission de force d'entraînement pour changer une trajectoire de transmission de force d'entraînement à l'intérieur de ce dernier, et un élément de fourchette (16) ayant une paire de parties de bras de mise en prise (13L, 13R) chacune maintenue en mise en prise avec le manchon par le biais de chacun des éléments de contact coulissant et une partie d'extrémité de base (14) actionnée pour se déplacer dans la direction axiale du manchon, moyennant quoi :
chacun des éléments de contact coulissant (11, 12) a une partie de plaque (11a, 12a) dont une surface latérale est en relation opposée avec la partie de commande annulaire (21, 22) dans la direction axiale du manchon, et une pluralité de saillies (11b, 12b; 11c, 12c) chacune retenue par la partie de bras de mise en prise (13L, 13R) de l'élément de fourchette pour faire saillie de l'autre surface latérale de la partie de plaque (11a, 12a), les saillies étant espacées les unes des autres dans la direction circonférentielle du manchon,
chacune des parties de bras de mise en prise de l'élément de fourchette a une partie de trou de retenue latérale (13b, 13d) retenant une saillie latérale à proximité de la partie d'extrémité de base de l'élément de fourchette parmi les saillies, et l'autre partie de trou de retenue latérale (13c, 13e) retenant l'autre saillie latérale à distance de la partie d'extrémité de base de l'élément de fourchette parmi les saillies, et **caractérisée en ce que** :
la partie montée constituée par la saillie latérale (11b, 12b) et la partie de trou de retenue latérale (13d) forment une partie de positionnement ayant un montage plus robuste que la partie montée constituée par l'autre saillie latérale (11c, 12c) et l'autre partie de trou de retenue latérale (13e).

2. Fourchette de boîte de vitesses selon la revendication 1, dans laquelle la dimension du jeu de montage entre une saillie latérale (11b, 12b) et une partie de trou de retenue latérale (13d) et la dimension de jeu de montage entre l'autre saillie latérale (11c, 12c) et l'autre partie de trou de retenue latérale (13e) sont déterminées de sorte que le jeu de montage entre une saillie latérale et une partie de trou de retenue latérale est inférieur au jeu de montage entre l'autre saillie latérale et l'autre partie de trou de retenue latérale.

3. Fourchette de boîte de vitesses selon la revendication 1, dans laquelle les saillies (11b, 12b ; 11c, 12c) des éléments de contact coulissant ont le même diamètre, et une partie de trou de retenue latérale (13b, 13d) est inférieure du point de vue du diamètre interne à l'autre partie de trou de retenue latérale (13c, 13e).

4. Fourchette de boîte de vitesses selon l'une quelconque des revendications 1 à 3, dans laquelle :
la partie de commande annulaire (21, 22) est constituée par deux parties de paroi positionnées des deux côtés d'une rainure périphérique externe annulaire formée sur la partie périphérique externe du manchon, et
les éléments de contact coulissant (11, 12) sont respectivement fixés des deux côtés de la partie de bras de mise en prise (13L, 13R) dans la direction radiale du manchon afin d'être respectivement maintenus en relation opposée avec les deux parties de paroi des deux côtés de la rainure périphérique externe annulaire.

5. Fourchette de boîte de vitesses selon la revendication 4, dans laquelle une partie de trou de retenue latérale (13b, 13d) et l'autre partie de trou de retenue latérale (13c, 13e) sont constituées par des alésages de passage parallèles formés pour traverser la partie de bras de mise en prise de l'élément de fourchette dans la direction axiale du manchon, et les saillies de l'élément de contact coulissant fixé d'un côté de la partie de bras de mise en prise et les saillies de l'élément de contact coulissant fixé de l'autre côté de la partie de bras de mise en prise sont maintenues en raccordement solidaire entre elles dans les alésages de passage.

6. Fourchette de boîte de vitesses selon la revendication 5, dans laquelle chacun des éléments de contact coulissant (11, 12) est réalisé à partir d'une résine.

7. Transmission manuelle comprenant la fourchette de boîte de vitesses selon la revendication 1.
